# EUROPÄISCHE PATENTANMELDUNG

(11) **EP 4 242 600 A1**
(43) Veröffentlichungstag der Anmeldung: **13.09.2023**
(21) Anmeldenummer: 23154134.3
(22) Anmeldetag: 31.01.2023
(51) Int. Cl.: G01F 1/663, G01F 1/74

(54) **DURCHFLUSSMESSGERÄT UND VERFAHREN ZUM BETREIBEN EINES SOLCHEN**

(30) Priorität: 11.03.2022 DE 102022105759
(71) Anmelder: Krohne AG, 4019 Basel (CH)
(72) Erfinder: Hogendoorn, Cornelis Johannes, 4211 BG Spijk (NL); Vogt, Michael, 44797 Bochum (DE)
(74) Vertreter: Gesthuysen Patentanwälte

(57) **Zusammenfassung**

Dargestellt und beschrieben ist Durchflussmessgerät (1) für ein Medium (6) mit den Phasen Wasser (7), Öl (8) und Gas (9). Das Durchflussmessgerät (1) weist einen Ultraschallwandler (3) zum Eintauchen in ein Messvolumen (10) des Mediums (6) und eine Steuerung (4) auf. Der Ultraschallwandler (3) ist einerseits zur Wandlung von elektrischen Sendesignalen in Ultraschallsendesignale und Abstrahlung der Ultraschallsendesignale in das Messvolumen (10) und andererseits zum Empfang von reflektierten Ultraschallempfangssignalen aus dem Messvolumen (10) und zur Wandlung der Ultraschallempfangssignale in elektrische Empfangssignale ausgebildet. Die Steuerung (4) ist zur Erzeugung der elektrischen Sendesignale und zur Bestimmung einer Geschwindigkeit des Mediums (6) im Messvolumen (10) unter Verwendung der elektrischen Empfangssignale ausgebildet.

Die Erfindung löst die Aufgabe, ein Durchflussmessgerät (1) anzugeben, welches weitere Eigenschaften des Mediums im Messvolumen bestimmt.

Die Aufgabe ist dadurch gelöst, dass die Steuerung (4) zur Bestimmung einer Reflexionsenergie von Ultraschallempfangssignalen aus dem Messvolumen (10) unter Verwendung der elektrischen Empfangssignale und zur Unterscheidung zwischen einerseits dem Wasser (7) und dem Öl (8) und andererseits dem Gas (9) im Messvolumen (10) unter Verwendung der Reflexionsenergie ausgebildet ist, dass das Durchflussmessgerät (1) einen Permittivitätssensor (5) zum Eintauchen in das Messvolumen (10) aufweist und dass die Steuerung (4) zur Bestimmung einer Permittivität (ε) des Mediums (6) im Messvolumen (10) unter Verwendung des Permittivitätssensors (5) und zur Unterscheidung zwischen einerseits dem Wasser (7) und andererseits dem Öl (8) und dem Gas (9) im Messvolumen (10) unter Verwendung der Permittivität (ε) ausgebildet ist.

## Beschreibung

Die Erfindung betrifft zum einen ein Durchflussmessgerät für ein Medium mit den Phasen Wasser, Öl und Gas. Das Durchflussmessgerät weist einen Ultraschallwandler zum Eintauchen in ein Messvolumen des Mediums und eine Steuerung auf.

Der Ultraschallwandler ist einerseits zur Wandlung von elektrischen Sendesignalen in Ultraschallsendesignale und Abstrahlung der Ultraschallsendesignale in das Messvolumen und andererseits zum Empfangen von Ultraschallempfangssignalen aus dem Messvolumen und zur Wandlung der Ultraschallempfangssignale in elektrische Empfangssignale ausgebildet. Demnach ist der Ultraschallwandler ein elektromechanischer Wandler.

Die Steuerung ist zur Erzeugung der elektrischen Sendesignale und zur Bestimmung einer Geschwindigkeit des Mediums im Messvolumen unter Verwendung der elektrischen Empfangssignale ausgebildet. Die Steuerung und der Ultraschallwandler sind zur Übertragung der elektrischen Sendesignale und der elektrischen Empfangssignale elektrisch miteinander verbunden.

Für gewöhnlich weist das Durchflussmessgerät ein Messrohr auf, an welchem der Ultraschallwandler angeordnet ist. Im Betrieb des Durchflussmessgeräts wird das Medium durch das Messrohr geströmt und ist der Ultraschallwandler in das Medium getaucht.

Die Erfindung betrifft zum anderen auch ein Verfahren zum Betreiben eines Durchflussmessgeräts für ein Medium mit den Phasen Wasser, Öl und Gas. Das Durchflussmessgerät weist einen Ultraschallwandler und eine Steuerung auf. Der Ultraschallwandler ist in ein Messvolumen des Mediums eingetaucht.

Das Verfahren umfasst die folgenden Schritte:
Von der Steuerung werden elektrische Sendesignale erzeugt und von dem Ultraschallwandler werden die elektrischen Sendesignale in Ultraschallsendesignale gewandelt und in das Messvolumen abgestrahlt.

Vom Ultraschallwandler werden Ultraschallempfangssignale aus dem Messvolumen empfangen und in elektrische Empfangssignale gewandelt. Von der Steuerung wird unter Verwendung der elektrischen Empfangssignale eine Geschwindigkeit des Mediums im Messvolumen bestimmt.

Das Medium weist die Phasen Wasser, Öl und Gas auf. Für gewöhnlich sind die Phasen voneinander separiert, auch wenn das Medium geströmt wird. Oftmals sind die Phasen Öl und Gas Blasen in der Phase Wasser.

Das beschriebene aus dem Stand der Technik bekannte Durchflussmessgerät und Verfahren zum Betreiben eines Durchflussmessgeräts bestimmen lediglich die Geschwindigkeit des Mediums in dem Messvolumen. Aufgabe der vorliegenden Erfindung ist die Angabe eines Durchflussmessgeräts und eines Verfahrens zum Betreiben eines Durchflussmessgeräts, bei welchen weitere Eigenschaften des Mediums im Messvolumen bestimmt werden.

Die Aufgabe wird durch ein Durchflussmessgerät mit den Merkmalen von Anspruch 1 gelöst.

Das Durchflussmessgerät ist dadurch gekennzeichnet, dass die Steuerung zur Bestimmung einer Reflexionsenergie von Ultraschallempfangssignalen aus dem Messvolumen unter Verwendung der elektrischen Empfangssignale und zur Unterscheidung zwischen einerseits dem Wasser und dem Öl und andererseits dem Gas im Messvolumen unter Verwendung der Reflexionsenergie ausgebildet ist.

Weiter weist das Durchflussmessgerät einen Permittivitätssensor zum Eintauchen in das Messvolumen auf. Die Steuerung ist zur Bestimmung einer Permittivität des Mediums im Messvolumen unter Verwendung des Permittivitätssensors und zur Unterscheidung zwischen einerseits dem Wasser und andererseits dem Öl und dem Gas im Messvolumen unter Verwendung der Permittivität ausgebildet.

Im Betrieb des Durchflussmessgeräts sind der Ultraschallwandler und der Permittivitätssensor in das Messvolumen des Mediums eingetaucht. Die Steuerung erzeugt die elektrischen Sendesignale. Der Ultraschallwandler wandelt die elektrischen Sendesignale in die Ultraschallsendesignale und strahlt diese in das Messvolumen ab. Der Ultraschallwandler empfängt auch die Ultraschallempfangssignale aus dem Messvolumen und wandelt diese in die elektrischen Empfangssignale. Die Steuerung bestimmt unter Verwendung der elektrischen Empfangssignale die Geschwindigkeit des Mediums im Messvolumen. Weiter bestimmt die Steuerung die Reflexionsenergie der Ultraschallempfangssignale aus dem Messvolumen unter Verwendung der elektrischen Empfangssignale und unterscheidet zwischen einerseits dem Wasser und dem Öl und andererseits dem Gas im Messvolumen unter Verwendung der Reflexionsenergie.

Ein Ultraschallsendesignal wird im Messvolumen an einer Grenzschicht zwischen zwei Phasen reflektiert, wenn diese Phasen unterschiedliche akustische Impedanzen aufweisen. Die akustische Impedanz einer Phase ist abhängig von einer Dichte der Phase. Somit sind Phasen mit unterschiedlichen Dichten unterscheidbar. Besonders gut unterscheidbar sind die Phasen Wasser und Öl von der Phase Gas, da sich deren Dichten deutlich unterscheiden. Das reflektierte Ultraschallsendesignal ist das Ultraschallempfangssignal. Ein Ultraschallempfangssignal entsteht also durch eine Reflexion eines Ultraschallsendesignals an einer Grenzschicht von zwei Phasen mit unterschiedlichen Dichten. Eine Reflexionsenergie eines Ultraschallempfangssignals ist abhängig vom Unterschied der akustischen Impedanzen der Phasen, welche eine Grenzschicht bilden. Eine Grenzschicht zwischen einer der beiden flüssigen Phasen Wasser und Öl und der gasförmigen Phase Gas bewirkt eine deutlich höhere Reflexionsenergie als eine Grenzschicht zwischen einer der beiden flüssigen Phasen und der anderen flüssigen Phase. Somit ist aus der Reflexionsenergie eine Dichte einer Phase bestimmbar.

Darüber hinaus bestimmt die Steuerung die Permittivität des Mediums im Messvolumen unter Verwendung des Permittivitätssensors und unterscheidet zwischen einerseits dem Wasser und andererseits dem Öl und dem Gas im Messvolumen unter Verwendung der Permittivität. Die Steuerung ist zur Erzeugung und Auswertung von elektrischen Messsignalen zur Bestimmung der Permittivität des Mediums ausgebildet. Die Steuerung und der Permittivitätssensor sind zur Übertragung der elektrischen Messsignale elektrisch miteinander verbunden. Die Permittivität von Wasser ist deutlich größer als die Permittivitäten von Öl und Gas. Somit ist die Phase Wasser von den Phasen Öl und Gas besonders gut unterscheidbar.

Das Durchflussmessgerät bestimmt zusätzlich zur Geschwindigkeit des Mediums im Messvolumen noch die Reflexionsenergie und die Permittivität des Mediums im Messvolumen. Das Messvolumen ist das Volumen des Mediums, in welchem zum einen eine Grenzschicht zwischen zwei Phasen des Mediums ist und zum anderen die Permittivität des Mediums bestimmt wird.

Diese Reflexionsenergie und diese Permittivität ermöglichen eine Bestimmung einer Phase des Mediums im Messvolumen. Die Phase des Mediums ist Wasser, wenn die Reflexionsenergie klein und die Permittivität groß ist. Die Phase ist Öl, wenn die Reflexionsenergie klein und auch die Permittivität klein ist. Die Phase ist Gas, wenn die Reflexionsenergie groß und die Permittivität klein ist. Die Begriffe "klein" und "groß" zur Bewertung der Reflexionsenergie und der Permittivität sind im vorliegenden Kontext relativ in dem Sinne zu verstehen, dass zum Beispiel die Reflexionsenergie von Wasser klein im Vergleich zu der von Gas ist.

Im Ergebnis ist das Durchflussmessgerät ausgebildet, die Geschwindigkeit einer Phase und die Phase im Messvolumen zu bestimmen, also ob es sich um Wasser, Öl oder Gas handelt.

In einer Ausgestaltung des Durchflussmessgeräts ist der Ultraschallwandler ein Piezo-Ultraschallwandler.

In einer Ausgestaltung weist der Ultraschallwandler einen akustischen Wellenleiter im Messvolumen auf. Der Wellenleiter weist ein Fenster auf, welches ausgebildet ist, zum einen die Ultraschallsendesignale abzustrahlen und zum anderen die Ultraschallempfangssignale zu empfangen. Im Betrieb des Durchflussmessgeräts werden vom Fenster die Ultraschallsendesignale abgestrahlt und die Ultraschallempfangssignale empfangen. Zumindest das Fenster ist im Messvolumen.

Es gibt verschiedene Möglichkeiten, den Wellenleiter auszugestalten.

In einer Ausgestaltung weist der Wellenleiter eine Größe im Bereich von Kolmogorov-Strukturen auf. Kolmogorov-Strukturen sind die kleinsten Strömungswirbel in einem Medium. Bei diesen sind Trägheits- und Viskositätskräfte auf der Längenskala im Gleichgewicht. Diese Größe des Wellenleiters ermöglicht die Bestimmung der Geschwindigkeit und der Phase des Mediums in besonders kleinen Messvolumen.

In einer weiteren Ausgestaltung weist der Wellenleiter einen Durchmesser von ungefähr 1 mm auf. Der Wellenleiter weist den Durchmesser vorzugsweise im Bereich des Fensters auf. Durch einen Durchmesser in dieser Größe wird ebenfalls erreicht, dass die Geschwindigkeit und die Phase in besonders kleinen Messvolumen bestimmbar sind.

In einer weiteren Ausgestaltung weist der Wellenleiter eine akustische Impedanz im Bereich einer akustischen Impedanz von Wasser und Öl auf. Dadurch wird eine nur geringe Reflexion der Ultraschallsendesignale und Ultraschallempfangssignale am Übergang vom Fenster zu Wasser und Öl erreicht.

In einer weiteren Ausgestaltung ist der Permittivitätssensor am Wellenleiter im Messvolumen angeordnet. Vorzugsweise ist der Permittivitätssensor in einem Bereich des Fensters angeordnet. Dadurch wird gewährleistet, dass die Reflexionsenergie und die Permittivität des Mediums in einem möglichst kleinen Messvolumen bestimmbar sind.

In einer weiteren Ausgestaltung ist der Permittivitätssensor am Ultraschallwandler im Messvolumen angeordnet.

In einer weiteren Ausgestaltung weist der Permittivitätssensor einen Kondensator mit mindestens einer ersten Elektrode und mindestens einer zweiten Elektrode im Messvolumen auf. Der Kondensator wird demnach im Betrieb des Durchflussmessgeräts von der mindestens einen ersten Elektrode, der mindestens einen zweiten Elektrode und dem Medium als Dielektrikum zwischen den beiden Elektroden gebildet. Die Steuerung ist zur Bestimmung einer Kapazität des Kondensators und zur Bestimmung der Permittivität des Mediums im Messvolumen unter Verwendung der Kapazität und einer Geometrie des Kondensators ausgebildet. Vorzugsweise bilden die mindestens zwei Elektroden, also die mindestens eine erste Elektrode und die mindestens eine zweite Elektrode, und das Medium einen Plattenkondensator mit einer Fläche A und einem Abstand d, sodass die Permittivität ε gemäß ε = C · d/A aus der Kapazität C bestimmbar ist. Die mindestens zwei Elektroden sind demnach parallel zueinander. In einer weiteren Ausgestaltung sind die mindestens zwei Elektroden koplanar zueinander angeordnet. Diese Anordnung der Elektroden ist insbesondere dann vorteilhaft, wenn Messungen nah an einer Oberfläche des Ultraschallwandlers durchgeführt werden sollen. Auch eine Kombination aus parallelen und koplanaren Elektroden ist möglich. In einer alternativen Ausgestaltung weist der Kondensator mindestens zwei erste Elektroden und mindestens zwei zweite Elektroden auf.

In einer Weiterbildung der vorstehenden Ausgestaltung weisen die mindestens eine erste Elektrode und die mindestens eine zweite Elektrode einen Abstand zwischen 0,2 mm und 3 mm, vorzugsweise zwischen 0,5 mm und 1 mm auf. Vorzugsweise korreliert der Abstand mit einer Größe der Kolmogorov-Strukturen.

Die Aufgabe ist auch durch ein Verfahren zum Betreiben eines Durchflussmessgeräts mit den Merkmalen von Anspruch 11 gelöst.

Das Durchflussmessgerät, welches das Verfahren ausführt, weist zusätzlich einen Permittivitätssensor auf, der ebenfalls in das Messvolumen des Mediums eingetaucht ist.

Das zuvor beschriebene Verfahren wird um die folgenden Schritte ergänzt:
Von der Steuerung wird unter Verwendung der elektrischen Empfangssignale eine Reflexionsenergie von den Ultraschallempfangssignalen aus dem Messvolumen bestimmt und zwischen einerseits dem Wasser und dem Öl und andererseits dem Gas im Messvolumen unter Verwendung der Reflexionsenergie unterschieden.

Von der Steuerung wird weiter eine Permittivität des Mediums im Messvolumen unter Verwendung des Permittivitätssensors bestimmt und wird zwischen einerseits dem Wasser und andererseits dem Öl und dem Gas im Messvolumen unter Verwendung der Permittivität unterschieden.

In einer Ausgestaltung des Verfahrens wird die Geschwindigkeit von der Steuerung nach einem Doppler-Effekt bestimmt.

In einer weiteren Ausgestaltung wird der Steuerung zunächst eine Reflexionsgrenzenergie vorgegeben und wird dann von der Steuerung eine Reflexionsenergie kleiner als die Reflexionsgrenzenergie dem Öl und dem Wasser und eine Reflexionsenergie größer als die Reflexionsgrenzenergie dem Gas im Messvolumen zugeordnet.

In einer Ausgestaltung wird der Steuerung zunächst eine Permittivitätsgrenze vorgegeben und wird dann von der Steuerung eine Permittivität kleiner als die Permittivitätsgrenze dem Öl und dem Gas und eine Permittivität größer als die Permittivitätsgrenze dem Wasser im Messvolumen zugeordnet.

In einer weiteren Ausgestaltung ist das Durchflussmessgerät, welches das Verfahren ausführt, gemäß einer der zuvor beschriebenen Ausgestaltungen und Weiterbildungen ausgebildet.

Im Übrigen gelten die Ausführungen zum Durchflussmessgerät entsprechend für das Verfahren zum Betreiben eines Durchflussmessgeräts und umgekehrt.

Im Einzelnen ist eine Vielzahl von Möglichkeiten gegeben, das Durchflussmessgerät und das Verfahren auszugestalten und weiterzubilden. Dazu wird verwiesen sowohl auf die den unabhängigen Ansprüchen nachgeordneten Ansprüche als auch auf die nachfolgende Beschreibung eines bevorzugten Ausführungsbeispiels in Verbindung mit der Zeichnung. In der Zeichnung zeigt
- Fig. 1: ein Ausführungsbeispiel eines Durchflussmessgeräts mit einem Ultraschallwandler und ein Permittivitätssensor,
- Fig. 2: den Ultraschallwandler und den Permittivitätssensor separat vom Durchflussmessgerät,
- Fig. 3a: das Durchflussmessgerät im Betrieb,
- Fig. 3b: eine vom Durchflussmessgerät bestimmte Dichte über der Zeit,
- Fig. 3c: eine vom Durchflussmessgerät bestimmte Permittivität über der Zeit und
- Fig. 4: ein Ablaufdiagramm eines Verfahrens.

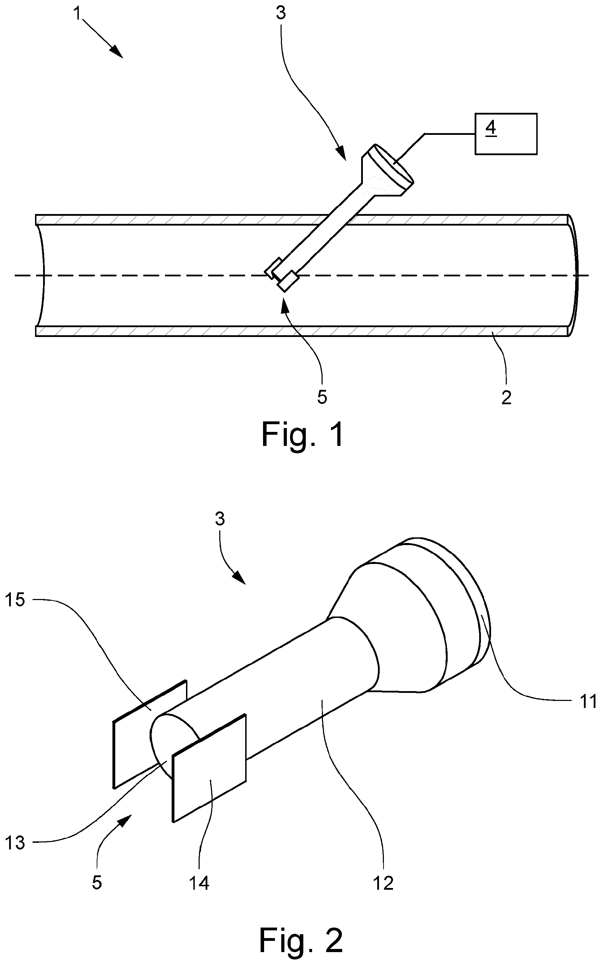

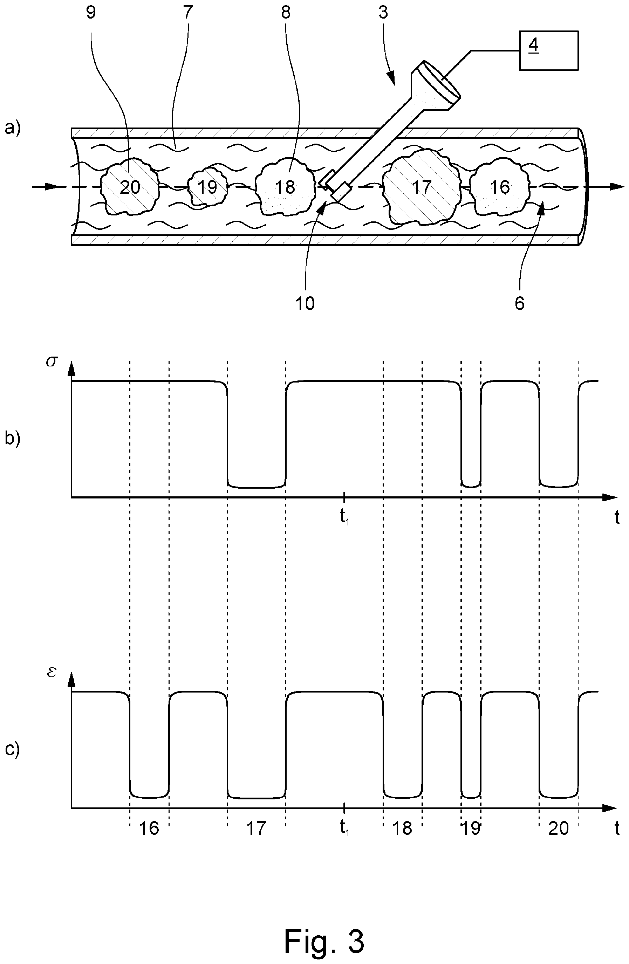

Fig. 1 zeigt in einer abstrahierten Darstellung wesentliche Merkmale eines Durchflussmessgeräts 1. Das Durchflussmessgerät 1 weist ein Messrohr 2, einen Ultraschallwandler 3, eine Steuerung 4 und einen Permittivitätssensor 5 auf. Fig. 2 zeigt in einer separaten abstrahierten Darstellung wesentliche Merkmale des Ultraschallwandlers 3 und des Permittivitätssensors 5. Das Messrohr 2 weist eine Öffnung auf, durch welche der Ultraschallwandler 3 und und der Permittivitätssensor 5 in einen Innenraum des Messrohrs 2 ragen. Im Betrieb des Durchflussmessgeräts 1 wird ein Medium 6 mit den Phasen Wasser 7, Öl 8 und Gas 9 durch das Messrohr 2 geströmt, siehe Fig. 3a. Dann sind der Ultraschallwandler 3 und der Permittivitätssensor 5 in ein Messvolumen 10 des Mediums 6 eingetaucht. Somit sind der Ultraschallwandler 3 und der Permittivitätssensor 5 zum Eintauchen in das Messvolumen 10 ausgebildet.

Der Ultraschallwandler 3 ist in diesem Ausführungsbeispiel ein piezoelektrischer Ultraschallwandler. Dieser weist einen PZT-Keramik 11 einerseits als Aktor zur Wandlung von elektrischen Sendesignalen in Ultraschallsendesignale und andererseits als Sensor zur Wandlung von Ultraschallempfangssignalen in elektrische Empfangssignale auf. Weiter weist der Ultraschallwandler 3 einen akustischen Wellenleiter 12 auf. Im vorliegenden Ausführungsbeispiel ist der Wellenleiter 12 im Wesentlichen ein Kreiszylinder mit einer ersten und einer zweiten Grundfläche. Die erste Grundfläche ist mit der PZT-Keramik 11 gekoppelt, sodass die Ultraschallsendesignale von der PZT-Keramik 11 in den Wellenleiter 12 eingekoppelt und die Ultraschallempfangssignale vom Wellenleiter 12 auf die PZT-Keramik 11 übertragen werden. Die zweite Grundfläche weist ein Fenster 13 auf, über welches die Ultraschallsendesignale in das Messvolumen 10 abgestrahlt und die Ultraschallempfangssignale aus dem Messvolumen 10 empfangen werden. Der Wellenleiter 12 hat einen Durchmesser von 1 mm und eine akustische Impedanz im Bereich einer akustischen Impedanz von dem Wasser 7 und dem Öl 8.

Somit ist der Ultraschallwandler 3 einerseits zur Wandlung der elektrischen Sendesignale in die Ultraschallsendesignale und Abstrahlung der Ultraschallsendesignale in das Messvolumen 10 und andererseits zum Empfang der Ultraschallempfangssignale aus dem Messvolumen 10 und zur Wandlung der Ultraschallempfangssignale in die elektrischen Empfangssignale ausgebildet.

Die Steuerung 4 ist zur Erzeugung der elektrischen Sendesignale und zur Bestimmung einer Geschwindigkeit des Mediums 6 im Messvolumen 10 unter Verwendung der elektrischen Empfangssignale ausgebildet. Die Steuerung 4 und der Ultraschallwandler 3 sind zur Übertragung der elektrischen Sendesignale und der elektrischen Empfangssignale elektrisch miteinander verbunden.

Weiter ist die Steuerung 4 zur Bestimmung einer Reflexionsenergie von den Ultraschallempfangssignalen aus dem Messvolumen 10 unter Verwendung der elektrischen Empfangssignale und zur Unterscheidung zwischen einerseits dem Wasser 7 und dem Öl 8 und andererseits dem Gas 9 im Messvolumen 10 unter Verwendung der Reflexionsenergie ausgebildet. Dazu ist die Steuerung 4 auch ausgebildet, eine Dichte σ des Mediums 6 im Messvolumen 10 aus der Reflexionsenergie zu bestimmen. Die von der Steuerung 4 im Betrieb des Durchflussmessgeräts 1 bestimmte Dichte σ über der Zeit t ist in Fig. 3b dargestellt.

Der Permittivitätssensor 5 ist am Wellenleiter 12 in unmittelbarer Nähe des Fensters 13 angeordnet. Im vorliegenden Ausführungsbeispiel ist der Permittivitätssensor 5 ein Kondensator mit einer ersten Elektrode 14 und einer zweiten Elektrode 15. Die beiden Elektroden bilden einen Plattenkondensator, wobei die erste Elektrode 14 und die zweite Elektrode 15 einen Abstand von 1 mm zueinander aufweisen.

Die Steuerung 4 ist zur Bestimmung einer Permittivität ε des Mediums 6 im Messvolumen 10 unter Verwendung des Permittivitätssensors 5 und zur Unterscheidung zwischen einerseits dem Wasser 7 und andererseits dem Öl 8 und dem Gas 9 im Messvolumen 10 unter Verwendung der Permittivität ε ausgebildet. Die Steuerung 4 ist zur Erzeugung und Auswertung von elektrischen Messsignalen zur Bestimmung der Permittivität ε des Mediums 6 ausgebildet. Die Steuerung 4 und der Permittivitätssensor 5 sind zur Übertragung der elektrischen Messsignale elektrisch miteinander verbunden. Die von der Steuerung 4 im Betrieb des Durchflussmessgeräts 1 bestimmte Permittivität ε über der Zeit ist in Fig. 3c dargestellt.

Da der Durchmesser des Wellenleiters 12 nur 1 mm und der Abstand der beiden Elektroden 14, 15 nur 1 mm beträgt, weisen der Wellenleiter 12 und der Permittivitätssensor 5 eine Größe im Bereich von Kolmogorov-Strukturen auf, weshalb einzelne Phasen des Mediums 6 messbar sind.

Wie bereits ausgeführt worden ist, zeigt Fig. 3a das Durchflussmessgerät 1 im Betrieb, wobei das Medium 6 mit den Phasen Wasser 7, Öl 8 und Gas 9 durch das Messrohr 2 in Pfeilrichtung geströmt wird. Und zwar ist das Durchflussmessgerät 1 zu einem Zeitpunkt t₁ gezeigt. Zu diesem Zeitpunkt sind in der Phase Wasser 7 fünf Blasen, nämlich eine erste Blase 16, eine zweite Blase 17, eine dritte Blase 18, eine vierte Blase 19 und eine fünfte Blase 20. Die erste Blase 17 und die dritte Blase 18 sind durch das Öl 8 gebildet und die zweite Blase 17, die vierte Blase 19 und die fünfte Blase 20 sind durch das Gas 9 gebildet.

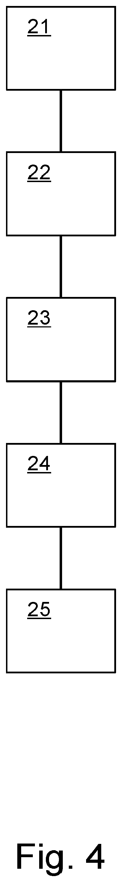

Das Durchflussmessgerät 1 führt ein Verfahren mit den in Fig. 4 dargestellten Verfahrensschritten aus.

In einem ersten Verfahrensschritt 21 werden von der Steuerung 4 elektrische Sendesignale erzeugt und von dem Ultraschallwandler 3 in Ultraschallsendesignale gewandelt und in das Messvolumen 10 des Mediums 6 abgestrahlt. In einem zweiten Verfahrensschritt 22 werden von dem Ultraschallwandler 3 Ultraschallempfangssignale aus dem Messvolumen 10 empfangen und in elektrische Empfangssignale gewandelt. Von der Steuerung 4 wird unter Verwendung der elektrischen Empfangssignale eine Geschwindigkeit des Mediums 7 im Messvolumen 6 bestimmt.

In einem dritten Verfahrensschritt 23 wird von der Steuerung 4 unter Verwendung der elektrischen Empfangssignale eine Reflexionsenergie von den Ultraschallempfangssignalen aus dem Messvolumen 10 bestimmt und unter Verwendung dieser eine Dichte σ des Mediums 6 im Messvolumen 10. Unter Verwendung der Dichte σ wird von der Steuerung 4 dann zwischen einerseits dem Wasser 7 und dem Öl 8 und andererseits dem Gas 9 im Messvolumen 10 unterschieden. Fig. 3b zeigt den Verlauf der bestimmten Dichte σ über der Zeit t.

In einem vierten Verfahrensschritt 24 wird von der Steuerung 4 eine Permittivität ε des Mediums 6 im Messvolumen 10 unter Verwendung des Permittivitätssensors 5 bestimmt und wird zwischen einerseits dem Wasser 7 und andererseits dem Öl 8 und dem Gas 9 im Messvolumen 10 unter Verwendung der Permittivität ε unterschieden. Fig. 3c zeigt den Verlauf der bestimmten Permittivität ε über der Zeit t.

In einem fünften Verfahrensschritt 25 wird von der Steuerung eine Phase des Mediums 6 im Messvolumen 10 gemäß den folgenden Kriterien bestimmt.

Die Phase des Mediums ist Wasser, wenn die Dichte σ groß und die Permittivität groß ist. Die Phase ist Öl, wenn die Dichte σ groß und auch die Permittivität ε klein ist. Die Phase ist Gas, wenn die Dichte σ klein und die Permittivität ε klein ist. Die Begriffe "klein" und "groß" zur Bewertung der Dichte σ und der Permittivität ε sind im vorliegenden Kontext relativ in dem Sinne zu verstehen, dass zum Beispiel die Dichte σ von Wasser groß im Vergleich zu der von Gas ist.

Somit kommt die Steuerung zum Beispiel zu den folgenden Ergebnissen. In dem Zeitraum, in welchem die erste Blase 16 im Messvolumen 10 ist, ist die Permittivität ε klein und die Dichte σ hoch. Demnach ist im Messvolumen 10 Öl 8. In dem Zeitraum, in welchem die zweite Blase im Messvolumen 10 ist, ist die Permittivität ε klein und die Dichte σ klein. Demnach ist im Messvolumen 10 Gas 9. In den Zeiträumen, wenn keine der Blasen im Messvolumen 10 ist, ist die Permittivität ε groß und die Dichte σ groß. Demnach ist Wasser 7 im Messvolumen 10.

### Bezugszeichen

- 1: Durchflussmessgerät
- 2: Messrohr
- 3: Ultraschallwandler
- 4: Steuerung
- 5: Permittivitätssensor
- 6: Medium
- 7: Wasser
- 8: Öl
- 9: Gas
- 10: Messvolumen
- 11: PZT-Keramik
- 12: Wellenleiter
- 13: Fenster
- 14: erste Elektrode
- 15: zweite Elektrode
- 16: erste Blase
- 17: zweite Blase
- 18: dritte Blase
- 19: vierte Blase
- 20: fünfte Blase
- 21: erster Verfahrensschritt
- 22: zweiter Verfahrensschritt
- 23: dritter Verfahrensschritt
- 24: vierter Verfahrensschritt
- 25: fünfter Verfahrensschritt

## Patentansprüche

1. Durchflussmessgerät (1) für ein Medium (6) mit den Phasen Wasser (7), Öl (8) und Gas (9),
wobei das Durchflussmessgerät (1) einen Ultraschallwandler (3) zum Eintauchen in ein Messvolumen (10) des Mediums (6) und eine Steuerung (4) aufweist,
wobei der Ultraschallwandler (3) einerseits zur Wandlung von elektrischen Sendesignalen in Ultraschallsendesignale und Abstrahlung der Ultraschallsendesignale in das Messvolumen (10) und andererseits zum Empfang von reflektierten Ultraschallempfangssignalen aus dem Messvolumen (10) und zur Wandlung der Ultraschallempfangssignale in elektrische Empfangssignale ausgebildet ist und
wobei die Steuerung (4) zur Erzeugung der elektrischen Sendesignale und zur Bestimmung einer Geschwindigkeit des Mediums (6) im Messvolumen (10) unter Verwendung der elektrischen Empfangssignale ausgebildet ist,
**dadurch gekennzeichnet,**
**dass** die Steuerung (4) zur Bestimmung einer Reflexionsenergie von Ultraschallempfangssignalen aus dem Messvolumen (10) unter Verwendung der elektrischen Empfangssignale und zur Unterscheidung zwischen einerseits dem Wasser (7) und dem Öl (8) und andererseits dem Gas (9) im Messvolumen (10) unter Verwendung der Reflexionsenergie ausgebildet ist,
**dass** das Durchflussmessgerät (1) einen Permittivitätssensor (5) zum Eintauchen in das Messvolumen (10) aufweist und
**dass** die Steuerung (4) zur Bestimmung einer Permittivität (ε) des Mediums (6) im Messvolumen (10) unter Verwendung des Permittivitätssensors (5) und zur Unterscheidung zwischen einerseits dem Wasser (7) und andererseits dem Öl (8) und dem Gas (9) im Messvolumen (10) unter Verwendung der Permittivität (ε) ausgebildet ist.

2. Durchflussmessgerät (1) nach Anspruch 1, **dadurch gekennzeichnet, dass** der Ultraschallwandler (3) ein piezoelektrischer Ultraschallwandler ist.

3. Durchflussmessgerät (1) nach Anspruch 1 oder 2, **dadurch gekennzeichnet, dass** der Ultraschallwandler (3) einen akustischen Wellenleiter (12) im Messvolumen (10) aufweist.

4. Durchflussmessgerät nach Anspruch 3, **dadurch gekennzeichnet, dass** der Wellenleiter (12) eine Größe im Bereich von Kolmogorov-Strukturen aufweist.

5. Durchflussmessgerät (1) nach Anspruch 3 oder 4, **dadurch gekennzeichnet, dass** der Wellenleiter (12) einen Durchmesser von ungefähr 1 mm aufweist.

6. Durchflussmessgerät (1) nach einem der Ansprüche 3 bis 5, **dadurch gekennzeichnet, dass** der Wellenleiter (12) eine akustische Impedanz im Bereich einer akustischen Impedanz von Wasser (7) und Öl (8) aufweist.

7. Durchflussmessgerät (1) nach einem der Ansprüche 3 bis 6, **dadurch gekennzeichnet, dass** der Permittivitätssensor (5) am Wellenleiter (12) im Messvolumen (10) angeordnet ist.

8. Durchflussmessgerät (1) nach einem der Ansprüche 1 bis 7, **dadurch gekennzeichnet, dass** der Permittivitätssensor (5) am Ultraschallwandler (3) im Messvolumen (10) angeordnet ist.

9. Durchflussmessgerät (1) nach einem der Ansprüche 1 bis 8, **dadurch gekennzeichnet,**
**dass** der Permittivitätssensor (5) einen Kondensator mit mindestens einer ersten Elektrode (14) und mindestens einer zweiten Elektrode (15) im Messvolumen (10) aufweist und
**dass** die Steuerung (4) zur Bestimmung einer Kapazität des Kondensators und zur Bestimmung der Permittivität (ε) des Mediums (6) im Messvolumen (10) unter Verwendung der Kapazität und einer Geometrie des Kondensators ausgebildet ist.

10. Durchflussmessgerät (1) nach Anspruch 9, **dadurch gekennzeichnet, dass** die mindestens eine erste Elektrode (14) und die mindestens eine zweite Elektrode (15) einen Abstand zwischen 0,2 mm und 3 mm, vorzugsweise zwischen 0,5 mm und 1 mm aufweisen.

11. Verfahren zum Betreiben eines Durchflussmessgeräts (1) für ein Medium (6) mit den Phasen Wasser (7), Öl (8) und Gas (9),
wobei das Durchflussmessgerät (1) einen Ultraschallwandler (3), eine Steuerung (4) und einen Permittivitätssensor (5) aufweist,
wobei der Ultraschallwandler (3) und der Permittivitätssensor (5) in ein Messvolumen (10) des Mediums (6) eingetaucht sind,
wobei von der Steuerung (4) elektrische Sendesignale erzeugt und von dem Ultraschallwandler (3) die elektrischen Sendesignale in Ultraschallsendesignale gewandelt und in das Messvolumen (10) abgestrahlt werden,
wobei vom Ultraschallwandler (3) reflektierte Ultraschallempfangssignale aus dem Messvolumen (10) empfangen und in elektrische Empfangssignale gewandelt werden und von der Steuerung (4) unter Verwendung der elektrischen Empfangssignale eine Geschwindigkeit des Mediums (6) im Messvolumen (10) bestimmt wird,
wobei von der Steuerung (4) unter Verwendung der elektrischen Empfangssignale eine Reflexionsenergie von den Ultraschallempfangssignalen aus dem Messvolumen (10) bestimmt und zwischen einerseits dem Wasser (7) und dem Öl (8) und andererseits dem Gas (9) im Messvolumen (10) unter Verwendung der Reflexionsenergie unterschieden wird und
wobei von der Steuerung (4) eine Permittivität (ε) des Mediums (6) im Messvolumen (10) unter Verwendung des Permittivitätssensors (5) bestimmt wird und zwischen einerseits dem Wasser (7) und andererseits dem Öl (8) und dem Gas (9) im Messvolumen (10) unter Verwendung der Permittivität (ε) unterschieden wird.

12. Verfahren nach Anspruch 11, wobei die Geschwindigkeit von der Steuerung (4) nach einem Doppler-Effekt bestimmt wird.

13. Verfahren nach Anspruch 11 oder 12, wobei der Steuerung (4) eine Reflexionsgrenzenergie vorgegeben wird und von der Steuerung (4) eine Reflexionsenergie kleiner als die Reflexionsgrenzenergie dem Öl (8) und dem Wasser (7) und eine Reflexionsenergie größer als die Reflexionsgrenzenergie dem Gas (9) zugeordnet wird.

14. Verfahren nach einem der Ansprüche 11 bis 13, wobei der Steuerung (4) eine Permittivitätsgrenze vorgegeben wird und von der Steuerung (4) eine Permittivität (ε) kleiner als die Permittivitätsgrenze dem Öl (8) und dem Gas (9) und eine Permittivität (ε) größer als die Permittivitätsgrenze dem Wasser (7) zugeordnet wird.

15. Verfahren nach einem der Ansprüche 11 bis 14 wobei das Durchflussmessgerät (1) nach einem der Ansprüche 2 bis 10 ausgebildet ist.
